# EUROPEAN PATENT SPECIFICATION

(11) **EP 1 978 884 B1**
(45) Date of publication and mention of the grant of the patent: **07.08.2019**
(21) Application number: 07716243.6
(22) Date of filing: 03.01.2007
(51) Int. Cl.: A61C 7/02, A61C 7/20

(54) **METHOD FOR LOCALIZED HEAT TREATMENT OF ORTHODONTIC WIRES**
VERFAHREN ZUR ÖRTLICHEN WÄRMEBEHANDLUNG ORTHODONTISCHER DRÄHTE
PROCÉDÉ DE TRAITEMENT THERMIQUE LOCALISÉ DE FILS ORTHODONTIQUES

(30) Priority: 04.01.2006 US 756295 P; 02.01.2007 US 618970
(43) Date of publication of application: 15.10.2008
(73) Proprietor: Hilliard, Jack Keith, Lakeland, FL 33813 (US)
(72) Inventor: Hilliard, Jack Keith, Lakeland, FL 33813 (US)
(74) Representative: Goddard, Frances Anna
(86) International application number: PCT/US2007/000076
(87) International publication number: WO 2007/081708

(56) References cited:
- AT-B- 119 234
- US-A- 2 859 327
- US-A- 3 729 824
- US-A- 4 037 324
- US-A- 4 926 028
- US-A- 5 167 499
- US-A- 5 624 258
- US-A- 5 722 827
- US-A1- 2002 192 617
- US-A1- 2003 124 480
- US-B1- 6 247 631
- US-B1- 6 293 790

## Description

### BACKGROUND OF THE INVENTION

### Field of the Invention.

The present invention relates generally to the field of orthodontics. More specifically, the present invention discloses a method of localized heat treatment to alter the metallurgical properties of selected regions of an orthodontic wire.

### Statement of the Problem.

The present invention relates to the adjustment of intra-oral orthodontic wires made by orthodontists at chairside. The present invention describes a new method for control of the magnitude of the corrective forces delivered to an orthodontic patient's teeth on a tooth-by-tooth basis. Such control is achieved by applying heat in a very concentrated and exacting manner and at metallurgically-active temperatures, which serves to alter the metallurgical condition and mechanical properties of orthodontic wires of certain alloys such as stainless steel and in particular superelastic nickel titanium. Moreover, the present invention alters the metallurgical condition of orthodontic wires to permit such alterations to be applied across exceedingly short zones without altering the overall pattern of stored energy of the otherwise resilient wire form. The size and spacing of such altered archwire zones can be controlled so that an altered segment can be limited to impact the forces applied to a single tooth without altering the forces applied to adjacent teeth. Within such altered zones, the metallurgical and mechanical properties of the wire are altered so that special forming, shaping and adaptive bends can be placed by an orthodontist as required to address the position and corrective force level requirements of individual mal-positioned teeth. Generally, such forming, shaping and bending steps would not be easily incorporated into stainless steel wires. For wires of the nickel-titanium alloy group, such efforts toward forming, shaping and bending would not be possible at all without first subjecting targeted segments of the wire to alteration according to the present invention. The metallurgical and mechanical property alterations made possible by the present invention are also valuable for altering stainless steel wire. Such alterations as applied to stainless steel alloy wire serve to moderately enhance tensile strength and spring properties, to help set the wire to retain a desired formed shape and to markedly increase toughness or resistance to breakage. To fully appreciate all aspects of the usefulness and utility of the present invention, the methods historically used to regulate and direct corrective orthodontic forces merit review below.

Orthodontics, the first specialty of dentistry, emerged slowly beginning in the late 1800's. It was not until the 1930's that the public differentiated orthodontists from general dentists and it became generally accepted that crooked teeth could be straightened through orthodontic treatment. It was not until the 1960's that "braces" became popular and widely affordable. From the beginning of the orthodontic specialty, and paralleling the acceptance and proliferation of orthodontics, two central themes emerged and continue even today that exemplify the advancement in the standard of care. These are: (a) a steady and continuous reduction in the physiological force levels orthodontists have employed to move teeth; and (b) the development of mechanical systems (improved armamentarium) that tend to target individual teeth with tailored forces as required for optimal physiological movement of individual teeth. These two historical goals are more fully accomplished through the practice of the present invention.

In orthodontic treatment, ever-gentler forces have proven to be more effective than higher forces at eliciting a favorable response. It has been proven that lighter forces allow teeth to actually reposition faster, and with less trauma to the roots, periodontal membrane and the supportive alveolar bone. Current research points to the likelihood that an optimally low-level of gentle continuous force required to move teeth has still not been incorporated into the practice of orthodontics today. The theoretical ideal low force value may be some level of exceedingly light force that is difficult to deliver using the currently-available armamentarium. Important advancements in orthodontic hardware have been realized in the areas of biocompatible alloys and the related metallurgical and mechanical processes used to manufacture them, but the fact remains that delivering exceedingly gentle biological forces to teeth is at odds with the general requirement that orthodontic hardware be sufficiently tough and robust to avoid distortion and breakage during treatment. The present invention allows today's armamentarium to better convey very gentle forces to the teeth while at the same time retaining general sturdiness to withstand the many challenges of orthodontically treating active, and sometimes uncooperative adolescents.

In the past, innovative philosophies of orthodontic treatment have been advanced that specifically attempted to embrace the advantages of very light forces and to tailor delivery of such forces to individual teeth. After all, it stands to reason that lower anterior teeth for example, being comparatively small, require less force to reposition than larger bicuspid teeth or molars, yet one conventional monolithic archwire transversing the entire arch would tend to deliver similar forces to all of the teeth. In the 1960's, a very influential orthodontist and educator, Dr. Jaraback introduced a treatment regime called "differential force" and an Australian orthodontist, Dr. Begg, introduced the "Lightwire" technique. These and other treatment approaches were brought forward along with dedicated armamentarium systems. Those systems, consisting of brackets, special archwires and various types of auxiliary springs were specifically intended to control and regulate the light force levels delivered to single teeth or groups of teeth. Those techniques fell from popular use largely due to the time and skill required to manipulate the challenging array of components. The present invention however continues with the same objectives of Jaraback and Begg. The present invention allows control and regulation of standard orthodontic hardware to impart the appropriate level of corrective force to a single tooth, with such forces being generated within metallic components attached thereto acting within an appropriate spring rate and spring range resulting in a very close approximation of the exact physiological force requirements of that tooth.

Delivery of corrective forces to each of an orthodontic patient's teeth is typically accomplished through orthodontic brackets which are rigidly attached to each of the twenty teeth and eight molar teeth. Brackets, which are connected to the teeth, serve to couple the teeth to a continuous interconnecting archwire. The archwire connects all of the brackets and thereby conveys the force-continuity between all of the teeth. The primary force-generating engine used in conventional orthodontic treatment involves the slow dissipation of stored energy within an archwire, which serves to move the teeth into a predetermined alignment and predetermined positions. As can be appreciated, the mechanical properties of the archwire as it interacts with the orthodontic brackets largely determines the range and force vector delivered to the roots of the teeth.

Orthodontists have other means at their disposal to generate and deliver corrective forces to individual teeth or groups of teeth. Examples include the tractive force of latex and polymeric rubber bands and polymeric chains, auxiliary metallic springs loaded in both compression and tension, tiny metallic jackscrews and other mechanically or resiliently-driven devices. All of these means for generating corrective forces are routinely harnessed for orthodontic treatment, but again, it should be understood that it is the archwire that is the central, unifying force generator and it is only the archwire that energetically provides the continuity of corrective forces to all of the teeth.

Prior to the early 1930's, little in the way of standardized orthodontic armamentarium was commercially available to the profession. Orthodontic appliances were typically constructed directly at chairside from the materials available to orthodontists of that day. Those materials consisted of the noble metals (i.e., gold, platinum and palladium). Gold alloys generally similar to the gold casting alloys used in dentistry were the material of choice for archwires. Other than cost considerations, gold alloy archwires served well, being both malleable and usefully hardenable at chairside. These alloys exhibited a modulus of elasticity of around 8.5 x 10⁶, thus indicating that such alloys were capable of delivering forces that are significantly lower than the stainless steel archwires familiar to orthodontists today. For wire segments of the same cross-sectional dimensions and length, the force-generating capabilities of gold alloy archwires was approximately only 60% that of stainless steel wires. Actual forces delivered to the teeth however were considerably higher than the force generated by stainless steel archwires because of two factors. First, the treatment techniques popular with orthodontists during the gold archwire era involved wire sizes different than the standardized cross-sectional dimensions used today. For example, the ribbon-shaped wires and dual round wires used in the past resulted in greater total cross-sectional area than today's standards. Second, the gold alloys were typically formed and then hardened and strengthened through the same ordering-phase transition heat treatment commonly used for the gold casting alloys. After forming and adapting gold archwires, orthodontists would typically harden gold wires using an alcohol lamp flame at chairside. Larger wires of hardened mechanical properties then drove teeth through the bone with forces that might be considered harmfully high today.

Introduced in the early 1930's, stainless steel replaced the noble metals and by the 1950's stainless steel was used for practically all orthodontic wire and appliance components. Unlike the noble metals and gold-based alloys, stainless steel cannot be effectively heat-treated to increase tensile strength, modulus of elasticity and hardness. Stainless steel can however undergo extensive cold working, sometimes called work hardening. Through cold working, its strength, modulus of elasticity and hardness can be increased over a range of about 400% above its fully annealed (soft) condition. It is this wide range of tempers that renders stainless steel so suitable for applications ranging from dead-soft ligature wire, partially-hardened bands and crowns, and full-hard finishing archwires.

Even though the tensile strength and hardness of stainless steel cannot be increased by heat processing, stainless steel can benefit from heat processes that moderately increase its desirable spring properties and markedly increase its toughness and resistance to breakage in the mouth, The process of normalization, sometimes referred to as "stress relieving" is typically carried out by heating stainless steel wire to around 454°C (850°F) for a period of time and then allowing it to cool relatively slowly. Normalization is employed to level-out the residual stresses and work hardening retained from wire drawing processes and to prevent premature breakage of complex appliances during assembly. In the manufacture of orthodontic appliances, work hardening results from processes such as press blanking, press forming and spanking, hand pliering, swaging, laser welding, resistance welding and extreme forming and bending. All these manipulations induce work hardening, which results in segments of the wire exhibiting highly disrupted zones containing extremely hard material. Similarly at chairside, as orthodontists adapt archwires, or install loops, posts, stops and corrective bends, the same sort of uneven increases in hardness result. Inclusions of such severe work hardening in the structure of the wire represent stress riser sites where after repeated loading, failure can be initiated and propagate. Stress relieving tends to level out stresses without reducing the underlying base temper. Process temperatures ranging from 400°C (752°F) to 600°C (1112°F) have been found effective for stress relieving stainless steel. In one typical specification, stainless steel wire is heated to approximately 454°C (850°F) for 30 minutes, and then allowed to cool slowly. Higher normalizing temperatures are thought to be effective in eliminating or reducing the undesirable simultaneous presence of both martensitic and austenitic grain structures, called a duplex structure. Co-existence of both of these states is considered undesirable, rendering the material unstable and negatively impacting corrosion resistance.

As will become apparent, one benefit of the present invention is that it allows for stress relieving and normalizing of highly-pliered appliances at chairside. Normalizing and stress relieving are normally considered to be industrial heat-treating processes requiring heavy industrial equipment, such as specialized furnaces with controlled atmospheres. Therefore, these processes have heretofore not generally been considered accomplishable in a dental office. Nonetheless, the important steps of metallurgical stress relieving and normalization can be carried out at chairside using the present invention.

The era of orthodontic development referred to earlier coinciding with the conversion to stainless steel and away from the noble metals also saw a standardization of bracket features and a coalescing of widely varying treatment mechanics into a more uniform set of standards. These changes brought about the delineation of a more or less default practice where orthodontists use a progressive series of archwires. It became standard practice for orthodontists to use stainless steel archwires of progressively higher and more energetic properties as treatment progressed from beginning to end. Treatment typically begins with wires exhibiting high deflection and low spring rates and progresses to wires of both increasing hardness and increasing cross-sectional size, with larger and stiffer wires being used to finish a case through final aesthetic positioning of the teeth. Within such a progression of archwires, it became possible for orthodontists to focus more on forces in general, and to tailor force levels to the physiological needs of an individual case at any given point along the treatment sequence. Treatment could be initiated for example with small round stainless archwires of diameters of 0.36 mm (0.014 inches) or even 0.30 mm (0.012 inches), followed by larger round wires, giving way to softer square and rectangular cross-sections, and ending with full size, hard stainless steel rectangular finishing wires. These general concepts remain a central part of treatment planning today in orthodontics.

As orthodontic practitioners generally "chased" the level of physiological force delivered to the roots of teeth downward, and carried use of generally lighter wires further along into the treatment sequence, the need for even lighter forces at the beginning of treatment was recognized. Toward that goal, archwires formed from woven and braided stainless steel wires were introduced in the 1970's. Such archwires consisting of as few as three and as many as eight much smaller individual wires, which were formed and then stress-relieved in a twisted, woven or braided configuration in the form of the dental arches.

The heat treatment (normalizing) step set the individual wires in their twisted, braided or woven configuration making them much less apt to unravel. The net mechanical properties of the multi-strand archwires were much more malleable that even the smallest diameter monolithic wires. The multi-strand wires exhibited the capability to zigzag in and out, up and down, within very tight radii and to even accomplish reversals of direction. Multi-strand wires were used to engage the arch slots of brackets on teeth in severe malocclusions. Such archwires are capable of these gymnastics without taking a set or generating undue binding or pain and in general, they are ideal for service at the beginning of treatment. Patients do not suffer the discomfort typically associated with less-forgiving wires, yet teeth unscramble more expeditiously than had been possible up to that time using even the lightest monolithic stainless steel wires.

After the introduction of multi-strand wire, the field of orthodontics underwent another period of innovation in the mid and late 1970's involving advances in archwire materials, archwire configuration and form, which allowed further refinement of the relationship between the science of metallurgy and the needs of orthodontists. At that point in the course of archwire development, the range of mechanical properties available through monolithic and multistrand stainless steel archwires had been for all practical purposes fully exploited. New materials with even more advanced properties were hypothesized. In 1962, a remarkable new alloy emerged from military research. It was given the name "Nitinol." By weight, the Nitinol alloy consists of about 55% nickel and 45% titanium. Of central relevance to the long-sought orthodontic objective of achieving very light and gentle forces, Nitinol is in fact very gentle. In terms of modulus of stiffness, in common forms, Nitinol is only about 26% as stiff as comparably sized stainless steel wire.

Nitinol also exhibits an extraordinarily gentle spring rate. Once loaded, further deflection generates very little additional stress through a very wide range of deflection. Nitinol also exhibits a very unusual shape memory characteristic. Its plateau-like steady stress-strain profile was deemed theoretically ideal for constant biological forces. Nitinol quickly became appreciated as being perhaps the ultimate orthodontic wire because of its combination of remarkably desirable properties. A much more refined version of the material was developed for orthodontic use as its very desirable properties provided the basis for successful commercialization. Orthodontic wires fabricated from the Nitinol alloy have come to be known in orthodontics as "Ni-Ti" wires and the use of Ni-Ti has been incorporated into the fabrication of nearly every type of orthodontic device. Currently, Ni-Ti and its variants, which can include the addition of the elemental constituents copper and molybdenum have become very popular with orthodontists today. U.S. Patent No. 4,037,324 to Andreasen described the core methodologies for treating orthodontic cases with the Ni-Ti alloy. It should be expressly understood that Ni-Ti alloys should be interpreted to include any alloy consisting mainly of nickel and titanium, or other metals in the nickel-titanium metallurgical group.

The present invention is accommodative of the metallurgical processing characteristics and limitations of Ni-Ti. During the manufacture of Ni-Ti wire forms, such as archwires, the Nitinol raw material in its as-drawn condition is fixtured and constrained to a predetermined anatomical arch form shape. Once physically constrained to the desired shape, the material is heated to about 930°F for a very short period of time to set its net shape. The time-at-temperature required to set the net shape is dependent on thermal mass of the fixturing and cross-sectional area of the Ni-Ti wire, but typically for orthodontic-sized wire, it requires only a minute or a few minutes of time at temperature. It is not necessary to attain an exact temperature to set the net shape and a small range of temperatures can be used for such shape-setting.

One commercial net-shape-setting process for example utilizes the electrical resistivity of the alloy. The shape-setting temperature is attained by applying the appropriate combination of voltage and amperage to the ends of the fixtured wire segment. The current through the wire is regulated to hold the wire at the desired temperature for the required dwell even though the electrical properties of Ni-Ti wire change as the metallurgical condition of the wire changes during the heat treatment. Once the wire cools, it is released from the fixturing and it permanently retains its fixtured shape.

Another prior-art approach to the net-shape-setting process used pliers formerly marketed by GAC International Inc. of Bohemia, NY, to electrically heat a Ni-Ti wire. The beaks of the GAC pliers serve as electrodes and the Ni-Ti wire itself completes a circuit so that current flows through the wire, thereby heating the Ni-Ti wire to a temperature above its shape-setting temperature.

The heat treatment net-shape-setting process normalizes the material while its metallurgical grain structure remains in a metallurgical state known as complete austenite. The characteristic austenitic grain structure is maintained all the way down to a temperature termed as the alloy's "transformation temperature." The transformation temperature threshold through which the wire passes as it cools is adjustable by varying other processing parameters and by slight variances to the alloy constituents. For orthodontic applications, the transformation temperature is most commonly set above body temperature, although other desirable effects can be obtained with the transformation temperature set slightly below body temperature.

As Nitinol cools from metallurically high shape-setting temperatures to below its transformation temperature, it undergoes a dramatic transformation in its mechanical properties. In this condition, called the martensitic phase, it is notably softer, extremely malleable and gentle. In the martensitic phase, the alloy exhibits a nearly flat profile for a portion of its stress-strain curve that has proven to be so appropriate as a physiological tooth-moving force.

One of the unique properties of the phase transition between these two metallurgical states is that it is completely reversible. The material can undergo the transition between the martensitic and austenitic phases by moderate cycling in temperature or by inducing and then removing mechanical stress. The mechanical properties exhibited by Ni-Ti wire in its austenitic and martensitic phases are distinctly different as are the properties exhibited by the material when it is in transition between the two states. To summarize, it can be said that the metallurgical properties of Ni-Ti are a result of a reversible solid-state phase transformation from austenite to martensite on cooling (or by deformation) and the reverse transformation from martensite to austenite on heating (or upon release of deformation).

A detailed discussion of the nature of the reversible phase transition properties of Ni-Ti is provided by Garrec et al., "Stiffness in Bending of a Superelastic Ni-Ti Orthodontic Wire as a Function of Cross-Sectional Dimension," The Angle Orthodontist, vol. 74, no. 5, pp. 691-696 (2003). At large deformation, Ni-Ti alloy wires exhibit superelastic behavior. This type of behavior is also called pseudo-elasticity, because there is a complete return to the origin in a loading-unloading cycle, similar to that in a classical linear or nonlinear elasticity. The path of return generates a hysteresis that depends on the amount of dissipated energy during the mechanical cycling. At the beginning of the strain, the alloy is austenitic and stable. At some critical force (F_{c}), which depends on temperature, the martensitic transformation occurs. Thus, the mechanical behavior of Ni-Ti wires is largely under the dependence of martensitic transformation. The plateau is caused by the ability of martensite to accommodate the applied deflection, by selecting the most favorably oriented variants along the direction of the strain. Each variant is connected with another variant by a twinning plane (intervariant interface) which moves easily upon loading.

At this temperature and without acting stress, this martensite is unstable, and specimens recover their original shape after unloading. The reverse transformation causes an unloading plateau. The original shape recovers completely by reverse transformation accompanied by the reverse movement of the interface between austenite and martensite phases. In this case, the elastic deformation is not a stretching out of bonds but results from a phase transformation with new equilibrium positions of atoms. It is a crystallographic structural change. The growth of most favorable martensitic variants accommodates the applied stress. This phenomenon requires lower energy than the pursuit of the Hookean elasticity and prevents the plastic deformation of the austenite in this temperature and stress range.

As can be appreciated, the as-yet unrealized historical goal of generating ideal, but exceedingly light force levels for tooth movement and the goal of delivering those forces adjusted to the needs of individual teeth can in theory be achieved by the accommodative superelastic properties of Ni-Ti. The remaining constraints to achieve this goal ironically involve the lack of formability of Ni-Ti wires (i.e., the inability of Ni-Ti to permanently undergo practical degrees of plastic deformation) due to its shape-memory characteristics. In the hands of orthodontists, superelastic Ni-Ti wires are nearly impossible to permanently bend and only with difficulty can slight permanent bends of large radius be formed at all. Such minor bends require extreme over-bending to accomplish, and the resulting energy storage capacity within such bends is usually variable or unpredictable. The unpredictability is due to the fact that the formation of a bend results from exceeding both the martensitic "stretch" accommodation and then the yield of the martensitic structure in a conventional crystallographic grain structure shearing sense. Such actions are truly destructive to the complex crystallographic structure of Ni-Ti. As such, two identical-appearing bends symmetrically placed on the right and left sides of an archwire can elicit widely varying physiological response due to the variably destructive effects of ill-advised bends in Ni-Ti wire.

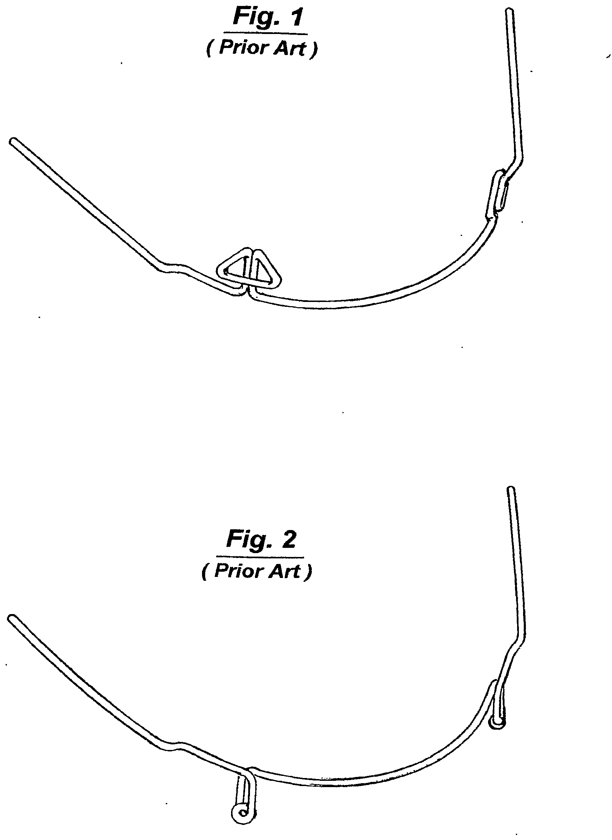

Orthodontists are accustomed to installing many types of formed shapes and bends in standard stainless wires. Wire bending is part and parcel of the orthodontist's vocation. Historically, before today's fully preformed straight-wire bracket systems, basic tooth positioning was achieved by installing a series of bends referred to as first, second and third order bends to correct the position of the teeth. Other than primary tooth-moving bends, other types of bends (e.g., closing loops) can be activated using instruments to progressively close an extraction site. "T" loops, omega loops, helical loops and all sorts of hieroglyphic-formed shapes are routinely installed in stainless steel archwires to add spring rate where needed around the arch and for expansion or contraction of the arch. Examples of conventional bends and loops are shown in FIGS. 1 and 2. An orthodontist can intrude all of a patient's lower anterior teeth by installing judicious bends on either side of an archwire, thus tilting the anterior segment downward, for example. Bending of archwires, segmental arches and wire segments is oftentimes accomplished for reasons other than for tooth movement or tooth positioning. For example, distal bends in archwires prohibit them from being pulled forward through buccal tubes thus establishing a set length to an archwire. This step is known as "cinching back" the archwire and is taken to unite the entire arch for anchorage in apposition to the other arch, or to pull an entire arch distally. A stop bend can be formed in a stainless steel archwire so that a tooth or a group of teeth can translate to a desired position along an archwire, but cannot undesirably move further. A midline bend can serve to maintain a symmetrical position of an archwire preventing it from sliding left or right and out of position.

It is due to the fundamental limitation of Ni-Ti wires involving their lack of formability that has relegated them largely to the beginning phases of treatment where bends are not generally required. In that first phase role, round Ni-Ti wires easily outperform small diameter round monolithic and multi-strand wires due to their remarkable ability to rapidly level the arches and unscramble severely malpositioned teeth. Ni-Ti wires in square and rectangular cross section are commercially available, and such wires do serve for mid-treatment and later-in-treatment functions, but such superelastic wires cannot accept any tight forming or bending other than the mildest adaptations and with that, their utility for use later in or at the end of treatment declines. Thus, the dilemma faced by orthodontists is that having found the ideal wire, there has been no practical way to form it in a conventional orthodontic office, and thus its application has been somewhat limited.

US 5,167,499 discloses a method for shaping an orthodontic palatal expansion arch wherein the arch is given a different shape by a re-heat treating of the Ni-Ti arch while holding in a newly formed shape.

US 2003/0124480 discloses an adjustable band made of shape memory mateiral which can shrink around the tooth by application of heat with a hot air gun.

US 5,624,258 discloses a method for shaping an orthodontic archwire, wherein a bend in the archwire may be formed by placing the archwire between two mating forming dies. Heat may be introduced in order to set the proper shape into the archwire.

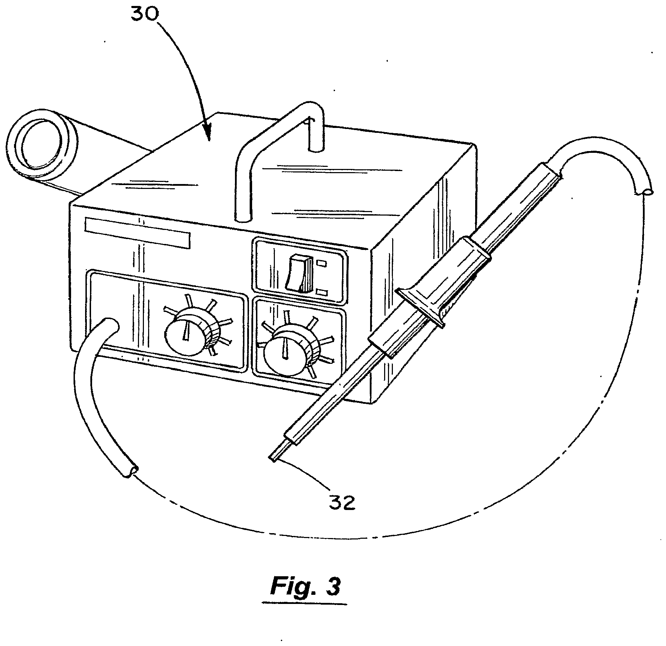

In order to provide a description of the present orthodontic-related invention, it is necessary to describe a specialized group of tools used in the semiconductor industry for repairing integrated circuit boards, and for salvaging or replacing valuable components from defective integrated circuit boards. In the field of electronics, it is standard practice to scrap integrated circuit boards that have failed. However, for salvage and re-use of expensive integrated circuits themselves on such boards, a variety of very fine tools have heretofore been created that can be used to manually solder and de-solder the tiny contacts connecting these components to a circuit board. These tools are sometimes referred to as "SMD rework" or "resoldering units." One example of such a tool is the Hakko 851 unit marketed by Hakko Corporation of Osaka, Japan. The Hakko unit supplies a hot air stream at a temperature of up to about 538°C (1000°F) and at a maximum flow rate of approximately 6 liters per minute through a tiny orifice or nozzle 32 ranging from about 1 to 3 mm in diameter. Hakko Corporation also offers other SMD rework units in larger and smaller sizes and capacities. A front perspective view of the Hakko unit 30 is shown in FIG. 3.

### Solution Of The Problem.

The present invention involves a method that permits the installation of all types of conventional bends and tightly-formed features in superelastic Ni-Ti wire, including archwires, and allows such wires to be aggressively adapted and highly contoured so that they can be inserted into the arch slot of even severely mal-positioned teeth. Through use of the present invention, orthodontists are finally able to achieve the generations-old goal of delivering ideal, very light forces to individual teeth through all phases of treatment, including the finishing phase.

For an understanding of the specific sequence of steps involved in the present invention, the reader should consider that as described above, during the manufacturing and commercial processing of Ni-Ti. wires a relatively high-temperature heating process is performed on the as-drawn Nitinol wire while it is constrained in fixtures of a predetermined anatomical shape. Such heating sets the overall shape of the arch form and also sets the wire while it is in its highly-ordered austenitic phase. The austenite structure of the Ni-Ti alloy is normal and orderly and exhibits none of the partial grain cleavage associated with the martensitic phase. The wire is literally set through the heat-treating process at the shape determined by the fixturing and subsequently it will "remember" that shape.

The present invention combines a means for directing the same metallurgical principles and commercial heat-treatment process used to set the net shape of Ni-Ti with a procedure that can be accomplished at chairside. Through the use of a small, highly-concentrated hot-air source, the temperatures required for the austenitic shape-setting step can be achieved to set desired features into the wire at multiple discreet zones around the length of the archwire. By rigidly holding those zones in handheld shape fixturing during such heating, precise and sharply formed bends and features can be installed in Ni-Ti wire. Such shapes emulate shapes traditionally formed in stainless steel archwires. Due to the austenitic shape-setting set, such shapes and features formed in Ni-Ti wire using the present invention are structurally, mechanically and metallurgically passive. Unaltered segments of the wire retain their preexisting shapes and metallurgical properties, and are otherwise unaffected by local heating according to the present invention. The present invention enables the orthodontist to create custom metallurgical tailoring of Ni-Ti archwires at chairside for the needs of an individual patient. Another advantage of the present invention is that subtle first, second and third order bends can be installed in Ni-Ti wire, not only allowing Ni-Ti alloy wires to be used during the middle and finishing phases of treatment, but to also allowing clearly superior biological forces and much lighter forces to be directed to individual teeth.

### SUMMARY OF THE INVENTION

This invention provides a method for localized heat treatment of selected regions of an orthodontic wire. A hot air source having a maximum flow rate of approximately 6 - 10 liters per minute is used to selectively heat a small region of the wire above a predetermined temperature to change its metallurgical properties while the wire is held in a desired shape by an instrument or fixture. After the wire has been maintained at temperature for the required period of time, it can be released and allowed to cool. For example, these capabilities are well-suited for shape-setting localized zones of austenitic Ni-Ti wire and for stress relieving and normalizing heavily-worked stainless steel wire.

These and other advantages, features, and objects of the present invention will be more readily understood in view of the following detailed description and the drawings.

### BRIEF DESCRIPTION OF THE DRAWINGS

The present invention can be more readily understood in conjunction with the accompanying drawings, in which:
FIGS. 1 and 2 are front perspective views of conventional archwires with examples of common archwire bends.
FIG. 3 is a front perspective view of a Hakko 851 unit.
FIG. 4 is a perspective view of a plier forming an omega loop shape in a Ni-Ti archwire while being heated by a hot air source.
FIGS. 5 and 6 are front perspective views of alternative embodiments of pliers to form other shapes in an orthodontic archwire.
FIGS. 7, 8 and 9 are perspective views of Ni-Ti archwires showing a variety of shapes that can be formed using the present invention.
FIG. 10 is a front perspective view of an archwire 20 showing an example of a complex bend 24 for positioning an individual mal-occluded tooth.
FIG. 11 is a detail view corresponding to FIG. 10 showing an enlargement of the complex bend 24 in the archwire 20.

### DETAILED DESCRIPTION OF THE INVENTION

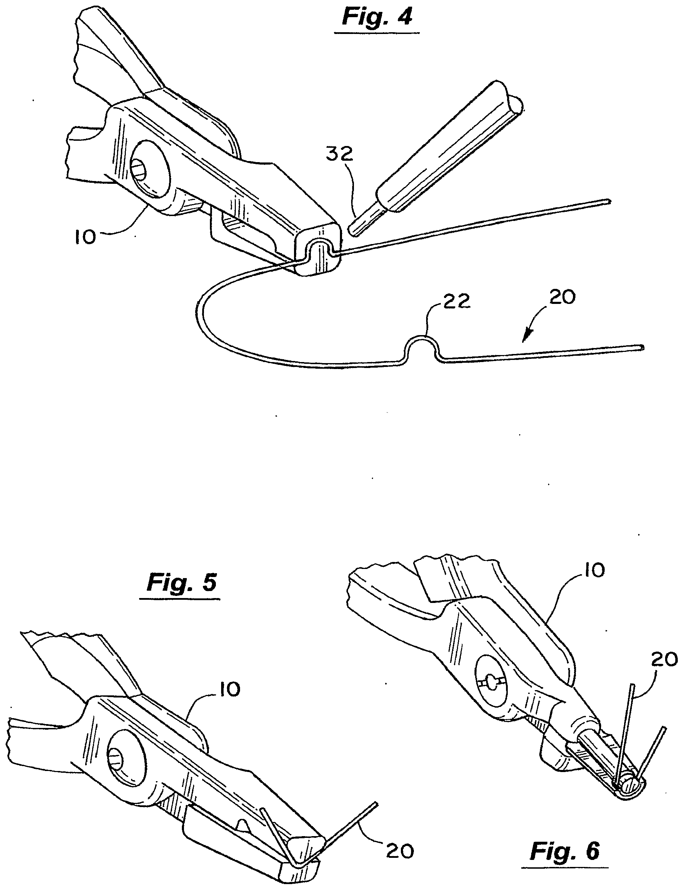

FIG. 4 shows a small region of an archwire 20 held and formed by an instrument 10, while being heated by a very small stream of superheated air from a hot air source 30. The hot air source 30 shown in FIG. 3 preferably has a maximum flow rate of approximately 6 to 10 liters per minute and delivers air at a temperature in the range of approximately 260°C to 538°C (500°F to 1000°F). For example, the Hakko 851 "SMD rework" unit marketed by Hakko Corporation of Osaka, Japan, has been found to be satisfactory for this purpose. It provides a convenient hand unit that enables a clinician to direct a small, precisely-controlled stream of heated air at a selected region of the wire 20 and the instrument 10. This unit allows adjustments over a wide ranges of temperatures and flow rates. In addition, a set of interchangeable nozzles 32 ranging from 1 to 3 mm in diameter are available.

Other hot air sources could be substituted in place of the Hakko unit. For example, a flow rate of up to approximately 10 liters per minute could be used. Also, other air temperatures can be used depending on the metallurgical properties of the wire. A range of small orifice sizes from approximately 0.6 to 10 mm and a wide variety of orifice shapes can be employed. The Hakko unit includes a set of round orifices. However, oval, square or rectangular orifices would also be suitable and are readily available in the marketplace.

As shown in FIG. 4, the clinician initially uses the hot air source 30 to selectively heat a small localized region of the wire 20 above a predetermined temperature while it is formed by the instrument 10. In the case of Ni-Ti alloys, the wire is heated to a temperature above the shape-setting temperature of the alloy. In the case of stainless steel alloys, the wire is heated above the temperature required for normalizing or stress relieving the alloy. This temperature can be held for a period of time, if necessary, depending on the metallurgical properties of the alloy. The hot air source 30 is then removed to allow the wire to cool. The rate at which the wire is allowed to cool can also be controlled by means of the hot air source 30. It should be understood that heat treating of metals, stress relieving and normalizing can be loosely grouped together as essentially the same process. Therefore, all of these should be construed as being within the scope of "normalizing" for the purposes of this disclosure.

For example, a Ni-Ti wire 20 can be held in the desired configuration while the nozzle 32 of the hot air source 30 heats the tips of the instrument 10 and the wire segment contained therein up to about 260°C to 538°C (500°F to 1000°F). As the tips of the instrument are heated by the hot air stream, the Ni-Ti material is heated to its shape-setting temperature and this temperature is maintained for a period of time while the wire 20 continues to be held in the desired form. After removal of the hot air source 30, the assembly is allowed to cool to an intermediate temperature and once sufficiently cooled, the plier 10 can be opened releasing the formed wire 20. These steps can be carried out at chairside to adapt a Ni-Ti archwire or other Ni-Ti wireform as per treatment requirements.

During the heating process, the size of the heated region can be controlled by the clinician by moving the nozzle 32 over a smaller or larger area of the wire 20, as needed. The size of the heated region and the rate of heating can also be changed by adjusting the air temperature, flow rate and proximity of the hot air source 30. The size of the heated region and the rate of heating can also be changed by substituting a nozzle 32 of a different size.

Other than the small stream of superheated air, there is normally no physical contact between the nozzle 32 of the hot air source 30 and the wire 20 or the instrument 10. Virtually all of the heat transfer from the hot air source 30 to the heated region of the wire 20 and the instrument 10 is accomplished by this stream of superheated air, rather than by contact between these components. This results in more uniform heating of the instrument 10 and the desired region of the wire 20, which in turn results in more uniform metallurgical properties of the heated region of the wire 20.

A hot air source 30 can take up to several minutes to warm up to operating temperatures, which can be undesirable for use at chairside. Several approaches can be used to hold the operating tip of the hot air source at high or intermediate temperatures between use, so that the chairside warm-up time is greatly reduced. For example, the tip of the hot air source 30 can be inserted into a container filled with heated beads. For example, ceramic, glass or metal beads could be used. Sand or other media could also be used. The hot air source itself can be set at low to percolated heated air through the media. Optionally, the beaks of the forming plier can also be placed in the heated media to hold them at an intermediate temperature to further reduce the warm-up time.

Any of a wide variety of instruments 10 can be used to hold and form the wire 20. For example in FIG. 4, a plier 10 is used to install a classic omega loop shape 22 on a Ni-Ti archwire 20. The nozzle 32 for the hot air source 30 can be seen coming in from the upper right in this figure. The beaks of the plier 10 are sized and configured to capture and form the Ni-Ti wire 20 to the desired shape, while the hot air source 30 brings the segment of the wire captured within the beaks of the plier 10, as well as portions of the beaks themselves, up to shape-setting temperatures. It should also be understood that a wide variety of other types of hand tools and handheld instruments can be used to holding and forming wires. FIGS. 5 and 6 show examples of other types of pliers that can be used to form distinctive features in wire. Fixtures and jigs also work well for forming a variety of features in wires.

The instruments 10 employed to form the wire 20 can be designed to exhibit new features particularly accommodative to the present invention, including beaks with reduced mass, increased surface area, or enhanced thermal conductivity for faster heat-up and cool-down. For example, metals with higher thermal conductivity, such silver, copper, gold, aluminum, tungsten could be used to clad the beaks of the plier 10. Even heating / cooling fins would serve well to increase the surface area exposed to heating or cooling air relative to the mass of the tips.

Other features of the associated instrument's tips and beaks that aid in capturing and constraining the wire further support the present invention. In contrast, the handles of the instruments can be made of a material having low thermal conductivity, or covered with a thermally-insulative material to protect the hands of the practitioner and reduce the amount of thermal energy necessary to heat the wire segment to shape-setting temperatures.

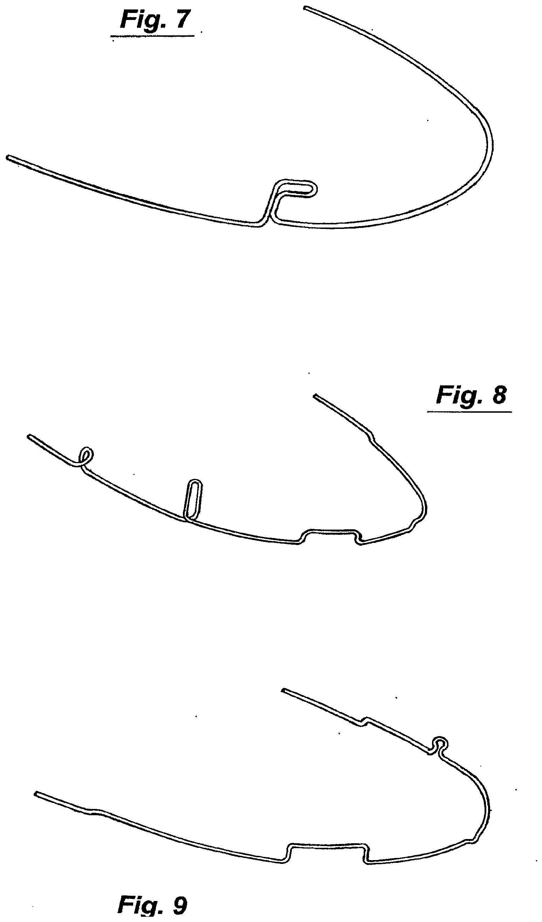

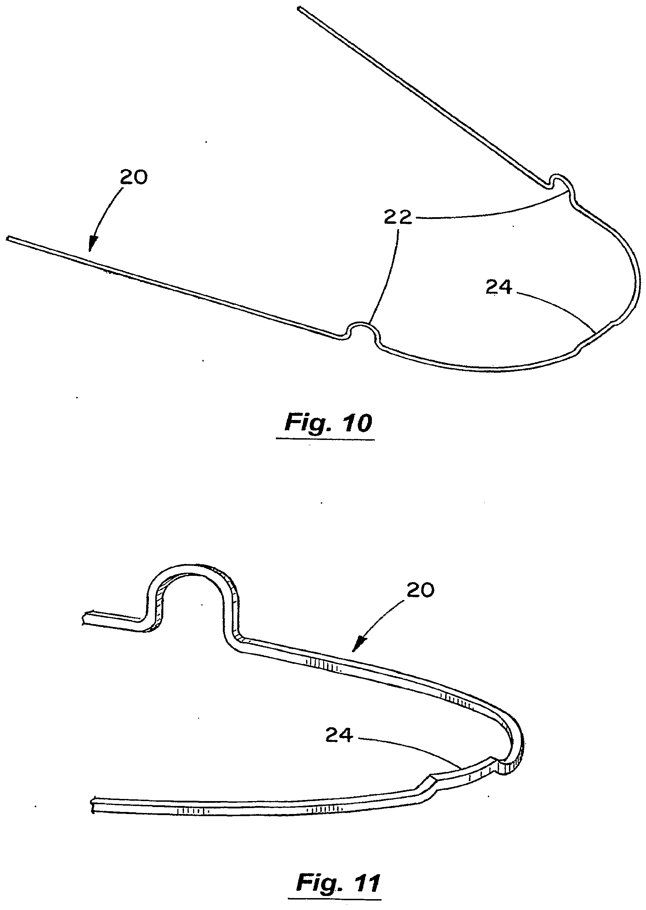

Many of the traditionally-useful features previously available only with stainless steel wires can be installed in Ni-Ti wires through use of the present invention, as shown for example in FIGS. 7 - 9. In particular, the type of complex bend 24 required for the positioning an individual tooth is shown in FIGS. 10 and 11. Such a bend 24 may become necessary at the end of treatment when the teeth are near their final finished positions. For example, a typical issue arising at the end of treatment may occur after an orthodontist has undesirably bonded the maxillary central left bracket a little too far gingivally at the beginning of treatment. Sometimes, once the case is nearly finished, a tooth will also need a bit of negative torque due to abnormal anatomy of the facial surface of the crown to which the bracket is bonded. It is these types of fine-tuning corrections that can add months to treatment and present vexing challenges to orthodontists using conventional treatment techniques.

As can be seen in FIGS 10 and 11, a complex step-up bend 24 leads to a section of wire generating negative torque in the bracket for a maxillary central right tooth. The step-up nature of the feature would also tend to create an intrusive force in an upper wire. The bend continues toward the midline with a step back down, and a resumption of a flat zero-torque wire. As can be appreciated, use of the present invention permits many such bracket-specific tooth-type corrections to be installed around an archwire according to positioning needs identifiable only at the end of treatment. Such discrete, sharply-formed torqueing and step up / down-type bends have not been possible using Ni-Ti wire prior to the present invention.

Further, the helpful benefits that would be available through the use of Ni-Ti archwires at the final stage of treatment have not been realizable prior to the present invention due the difficulties in installing subtle corrective bends in Ni-Ti wire, as previously discussed. The ability to form bends at chairside, as shown in FIGS. 10 and 11, has not been possible heretofore and such a capability is truly remarkable.

The discussion above has focused primarily on use of the present invention in forming orthodontic archwires. It should be expressly understood that the present invention can be applied to a variety of other types of wireforms used in orthodontics, such as closing springs, transpalatal segments, buccal segments, anterior bows, arms, and the like.

The above disclosure sets forth a number of embodiments of the present invention described in detail with respect to the accompanying drawings. Those skilled in this art will appreciate that various changes, modifications, other structural arrangements, and other embodiments could be practiced under the teachings of the present invention without departing from the scope of this invention as set forth in the following claims.

## Claims

1. A method for localized heat treatment of a selected region of an orthodontic
wire comprising:
forming a small region (22) of a wire (20) into a desired shape;
selectively heating the small region (22) of a wire (20) above a temperature to change its metallurgical properties using a hot air source (30) having a small nozzle (32) and a maximum flow rate of approximately 10 liters per minute while maintaining the desired shape of the region (22) of the wire (20), and
cooling the heated region (22).

2. The method of claim 1 where in the wire (20) comprises a nickel-titanium alloy or a stainless steel alloy.

3. The method of claim 2 wherein the wire (20) comprises nickel-titanium alloy and the region (22) of the wire (20) is heated to a temperature above the shape-setting temperature of the nickel-titanium alloy.

4. The method of claim 2 wherein the wire (20) comprises nickel-titanium alloy
and the region (22) of the wire (20) is heated to a temperature of approximately 260°C to 538°C (500°F to 1000°F).

5. The method of claim 2 wherein the wire (20) comprises stainless steel alloy and the region (22) of the wire (20) is heated to a temperature sufficient to normalize the stainless steel alloy.

6. The method of claim 1 wherein the region (22) of the wire (20) is formed into a desired shape between the beaks of a forming plier (10).

7. The method of claim 1 wherein the hot air source (30) supplied heated air through a nozzle (32) having an orifice of approximately 0.6 to 10mm.

## Patentansprüche

1. Verfahren zur örtlichen Wärmebehandlung eines ausgewählten Bereichs eines kieferorthopädischen Drahts, umfassend:
Formen eines kleinen Bereichs (22) eines Drahts (20) zu einer gewünschten Form,
gezieltes Erhitzen des kleinen Bereichs (22) eines Drahts (20) über eine Temperatur zur Änderung seiner metallurgischen Eigenschaften unter Verwendung einer Heißluftquelle (30) mit einer kleinen Düse (32) und eine maximalen Durchfluss von ungefähr 10 Litern pro Minute unter Aufrechterhaltung der gewünschten Form des Bereichs (22) des Drahts (20) und Abkühlen des erhitzten Bereichs (22).

2. Verfahren nach Anspruch 1, wobei der Draht (20) eine Nickel-Titan-Legierung oder eine Edelstahllegierung umfasst.

3. Verfahren nach Anspruch 2, wobei der Draht (20) eine Nickel-Titan-Legierung umfasst und der Bereich (22) des Drahts (20) auf einer Temperatur über der Formerstarrungstemperatur der Nickel-Titan-Legierung erhitzt wird.

4. Verfahren nach Anspruch 2, wobei der Draht (20) eine Nickel-Titan-Legierung umfasst und der Bereich (22) des Drahts (20) auf eine Temperatur von ungefähr 260°C bis 538°C (500°F bis 1000°F) erhitzt wird.

5. Verfahren nach Anspruch 2, wobei der Draht (20) eine Edelstahllegierung umfasst und der Bereich (22) des Drahts (20) auf eine Temperatur erhitzt wird, die zur Normalisierung der Edelstahllegierung ausreicht.

6. Verfahren nach Anspruch 1, wobei der Bereich (22) des Drahts (20) zwischen den Schnäbeln einer Formzange (10) zu einer gewünschten Form geformt wird.

7. Verfahren nach Anspruch 1, wobei die Heißluftquelle (30) erhitzte Luft durch eine Düse (32) mit einer Öffnung von ungefähr 0,6 bis 10 mm zuführt.

## Revendications

1. Procédé pour le traitement thermique localisé d'une région sélectionnée d'un fil orthodontique, comprenant :
la formation d'une petite région (22) d'un fil (20) avec une forme souhaitée ;
le chauffage sélectif de la petite région (22) d'un fil (20) au-dessus d'une température de changement de ses propriétés métallurgiques en utilisant une source d'air chaud (30) ayant une petite buse (32) et un débit maximum d'environ 10 1 par minute tout en maintenant la forme souhaitée de la région (22) du fil (20), et
le refroidissement de la région chauffée (22).

2. Procédé selon la revendication 1, dans lequel le fil (20) comprend un alliage de nickel-titane ou un alliage d'acier inoxydable.

3. Procédé selon la revendication 2, dans lequel le fil (20) comprend un alliage de nickel-titane et la région (22) du fil (20) est chauffée à une température au-dessus de la température de mise en forme de l'alliage de nickel-titane.

4. Procédé selon la revendication 2, dans lequel le fil (20) comprend un alliage de nickel-titane et la région (22) du fil (20) est chauffée à une température d'environ 260°C à 538°C (500°F à 1000°F).

5. Procédé selon la revendication 2, dans lequel le fil (20) comprend un alliage d'acier inoxydable et la région (22) du fil (20) est chauffée à une température suffisante pour normaliser l'alliage d'acier inoxydable.

6. Procédé selon la revendication 1, dans lequel la région (22) du fil (20) est formée avec une forme souhaitée entre les becs d'une pince de formage (10) .

7. Procédé selon la revendication 1, dans lequel la source d'air chaud (30) fournit de l'air chauffé à travers une buse (32) ayant un orifice d'environ 0,6 à 10 mm.
